# EUROPÄISCHE PATENTSCHRIFT

(11) **EP 4 473 145 B1**
(45) Veröffentlichungstag und Bekanntmachung des Hinweises auf die Patenterteilung: **31.12.2025**
(21) Anmeldenummer: 22821890.5
(22) Anmeldetag: 22.11.2022
(51) Int. Cl.: C25B 1/04, C25B 11/052, C25B 11/056, C25B 11/061, C25B 11/089, C25D 3/12, C25D 3/56, C25D 5/08, C25D 5/14, C25D 7/00

(54) **ELEKTRODENFASER, ELEKTRODE, ELEKTROLYSEZELLE UND VERFAHREN ZUM HERSTELLEN DER ELEKTRODENFASER UND DER ELEKTRODE**
ELECTRODE FIBRE, ELECTRODE, ELECTROLYSIS CELL AND PROCESS FOR PRODUCING THE ELECTRODE FIBRE AND THE ELECTRODE
FIBRE D'ÉLECTRODE, ÉLECTRODE, CELLULE D'ÉLECTROLYSE ET PROCÉDÉ DE PRODUCTION DE LA FIBRE D'ÉLECTRODE ET DE L'ÉLECTRODE

(30) Priorität: 31.01.2022 DE 102022200979
(43) Veröffentlichungstag der Anmeldung: 11.12.2024
(73) Patentinhaber: Siemens Energy Global GmbH & Co. KG, 81739 München (DE)
(72) Erfinder: KLINGER, Andre, 90429 Nürnberg (DE); MUSAYEV, Yashar, 90425 Nürnberg (DE); SCHMID, Günter, 91334 Hemhofen (DE)
(86) Internationale Anmeldenummer: PCT/EP2022/082698
(87) Internationale Veröffentlichungsnummer: WO 2023/143771

(56) Entgegenhaltungen:
- US-A1- 2009 050 362
- PÉREZ-ALONSO F J ET AL: "Ni/Fe electrodes prepared by electrodeposition method over different substrates for oxygen evolution reaction in alkaline medium", INTERNATIONAL JOURNAL OF HYDROGEN ENERGY, ELSEVIER, AMSTERDAM, NL, vol. 39, no. 10, 22 January 2014 (2014-01-22), pages 5204 - 5212, XP028627806, ISSN: 0360-3199, DOI: 10.1016/J.IJHYDENE.2013.12.186
- ZHU SILU ET AL: "Modification of stainless steel fiber felt via in situ self-growth by electrochemical induction as a robust catalysis electrode for oxygen evolution reaction", INTERNATIONAL JOURNAL OF HYDROGEN ENERGY, ELSEVIER, AMSTERDAM, NL, vol. 45, no. 3, 6 December 2019 (2019-12-06), pages 1810 - 1821, XP085983033, ISSN: 0360-3199, DOI: 10.1016/J.IJHYDENE.2019.11.052

## Beschreibung

Herkömmlich können Wasserstoff und Sauerstoff beispielsweise im alkalischen Milieu durch eine Elektrolyse von Wasser hergestellt werden. Die Elektrolyse wird in einer Elektrolysezelle durchgeführt, wobei an einer Anode der Elektrolysezelle die Reaktion 4OH⁻ → 2H₂O + O₂ + 4e⁻ abläuft und an einer Kathode der Elektrolysezelle die Reaktion 2H₂O + 2e⁻ → 2OH⁻ + H₂ abläuft. Die Elektrolysezelle kann eine Membran aufweisen, die die Anode von der Kathode trennt. In der Elektrolysezelle ist zum Erreichen der gewünschten Produktionsrate (proportional zum Gesamtstrom) eine bestimmte Spannung notwendig und sollte aus Effizienzgründen so gering wie möglich sein. Die notwendige Spannung hängt unter anderem von der katalytischen Aktivität der Elektroden ab. Elektroden mit einer guten katalytischen Aktivität weisen beispielsweise Partikel auf, die mit einer katalytischen Schicht beschichtet sind. Die Partikel kontaktieren einander, um eine elektrische Leitfähigkeit zwischen den Partikeln zu ermöglichen. Bei den Partikeln kann es sich beispielsweise um Kohlenstoffpartikel handeln. Diese Elektroden haben jedoch den Nachteil, dass sie mechanisch anfällig für Beschädigungen sind. In einem anderen Beispiel weisen die Elektroden einen Nickelschaum auf. Der Nickelschaum hat jedoch den Nachteil, dass er die Membran perforieren kann.

In PÉREZ-ALONSO F J ET AL: "Ni/Fe electrodes prepared by electrodeposition method over different substrates for oxygen evolution reaction in alkaline medium", INTERNATIONAL JOURNAL OF HYDROGEN ENERGY, ELSEVIER, AMSTERDAM, NL, Bd. 39, Nr. 10, 22. Januar 2014 (2014-01-22), Seiten 5204-5212, XP028627806, ISSN: 0360-3199, DOI: 10.1016/J.IJHYDENE.2013.12.186, US 2009/050362 A1 und ZHU SILU ET AL: 1, Modification of stainless steel fiber felt via in situ self-growth by electrochemical induction as a robust catalysis electrode for oxygen evolution reaction 1, INTERNATIONAL JOURNAL OF HYDROGEN ENERGY, ELSEVIER, AMSTERDAM, NL, Bd. 45, Nr. 3, 6. Dezember 2019 (2019-12-06), Seiten 1810-1821, XP085983033, ISSN: 0360-3199, DOI: 10.1016/J.IJHYDENE.2019.11.052 sind verschiedene Elektroden beschrieben.

Aufgabe der Erfindung ist es daher, eine Elektrode und eine Elektrolysezelle mit der Elektrode sowie ein Verfahren zum Herstellen der Elektrode zu schaffen, wobei die Elektrode wenig mechanisch anfällig für Beschädigungen ist.

Die erfindungsgemäße Elektrodenfaser weist eine Edelstahlfaser, eine Haftbeschichtung und eine katalytische Schicht auf. Die Edelstahlfaser weist einen Edelstahl auf, der einen Anteil von Ni (Nickel) von mindestens 1 Massen-%, insbesondere mindestens 8 Massen-%, aufweist. Die Haftbeschichtung ist unmittelbar auf die Edelstahlfaser aufgebracht, umhüllt die Edelstahlfaser und weist einen Anteil von Ni von mindestens 80 Massen-% auf. Die katalytische Schicht ist unmittelbar auf die Haftbeschichtung aufgebracht und umhüllt die Haftbeschichtung. Zudem weist die katalytische Schicht entweder eine erste Legierung oder eine zweite Legierung oder eine dritte Legierung auf. Die erste Legierung weist Ni und Fe (Eisen) mit einem addierten Anteil von Ni und Fe von mindestens 90 Massen-% in der katalytischen Schicht auf. Die zweite Legierung weist Ni und Co (Cobalt) mit einem addierten Anteil von Ni und Co von mindestens 90 Massen-% in der katalytischen Schicht auf. Die dritte Legierung weist Ni, Co und Fe mit einem addierten Anteil von Ni, Co und Fe von mindestens 90 Massen-% in der katalytischen Schicht auf.

Die Elektrodenfaser ist vorteilhaft mechanisch wenig anfällig gegen Beschädigungen, insbesondere in einem Vergleich mit einer herkömmlichen Elektrode, die einander kontaktierende Partikel aufweist. Zudem ist eine Perforation einer Membran aufgrund der Flexibilität der Elektrodenfaser wenig wahrscheinlich, wenn die Elektrodenfaser die Membran kontaktiert. Des Weiteren ist durch das Vorsehen der katalytischen Schicht der Aktivierungswiderstand bei einem Durchführen einer Elektrolyse mit der in einer Elektrode eingesetzten Elektrodenfaser vorteilhaft niedrig. Die katalytische Schicht ist durch das Vorsehen der Haftbeschichtung besonders fest an der Edelstahlfaser befestigt. Außerdem wird durch die Haftbeschichtung die katalytische Schicht mit einem geringen ohmschen Widerstand an die Edelstahlfaser angeschlossen. Durch die genannten Vorteile eignet sich die Elektrodenfaser in besonderer Weise, um in der Elektrode elektrochemischer Bauelemente, bevorzugt bei einer Elektrolyse von Wasser, eingesetzt zu werden.

Die Edelstahlfaser besteht bevorzugt aus dem Edelstahl und optional aus unvermeidbaren Verunreinigungen und/oder prozesstechnisch notwendigen Begleitstoffen.

Die Haftbeschichtung weist erfindungsgemäß einen Anteil von Ni von mindestens 90 Massen-% auf. Bevorzugt besteht die Haftbeschichtung aus Ni und optional aus unvermeidbaren Verunreinigungen.

Die erste Legierung weist bevorzugt Ni und Fe mit einem addierten Anteil von Ni und Fe von mindestens 95 Massen-% auf oder besteht aus Ni und Fe und optional unvermeidbaren Verunreinigungen. Die zweite Legierung weist bevorzugt Ni und Co mit einem addierten Anteil von Ni und Co von mindestens 95 Massen-% auf oder besteht aus Ni und Co und optional unvermeidbaren Verunreinigungen. Die dritte Legierung weist bevorzugt Ni, Co und Fe mit einem addierten Anteil von Ni, Co und Fe von mindestens 95 Massen-% auf oder besteht aus Ni, Co und Fe und optional unvermeidbaren Verunreinigungen.

In der ersten Legierung liegt das Stoffmengenverhältnis n(Ni)/n(Fe) erfindungsgemäß in einem Bereich von 6 bis 12, insbesondere in einem Bereich von 8 bis 10, wobei n(Ni) die Stoffmenge von Ni in der ersten Legierung ist und n(Fe) die Stoffmenge von Fe in der ersten Legierung ist. In der zweiten Legierung liegt das Stoffmengenverhältnis n(Ni)/n(Co) erfindungsgemäß in einem Bereich von 5/3 bis 9/3, insbesondere von 6/3 bis 8/3 oder von 6,5/3 bis 7,5/3, wobei n(Ni) die Stoffmenge von Ni in der zweiten Legierung ist und n(Co) die Stoffmenge von Co in der zweiten Legierung ist. In der dritten Legierung liegt das Stoffmengenverhältnis n(Ni)/n(Co) erfindungsgemäß in einem Bereich von 0,2 bis 3 und das Stoffmengenverhältnis n(Fe)/n(Co) liegt bevorzugt in einem Bereich von 1 bis 12, wobei n(Ni) die Stoffmenge von Ni in der dritten Legierung ist, n(Co) die Stoffmenge von Co in der dritten Legierung ist und n(Fe) die Stoffmenge von Fe in der dritten Legierung ist.

Eine Dicke der Haftbeschichtung liegt bevorzugt in einem Bereich von 0,05 µm bis 0,1 µm. Dadurch wird eine besonders gute Haftung der katalytischen Schicht an der Edelstahlfaser erreicht. Es ist bevorzugt, dass eine Dicke der katalytischen Schicht in einem Bereich von 0,01 µm bis 0,5 µm, insbesondere von 0,1 µm bis 0,2 µm, liegt. Durch die Obergrenze wird erreicht, dass keine zu großen mechanischen Spannungen in der katalytischen Schicht entstehen und somit ein Abplatzen der katalytischen Schicht und die Bildung von Rissen in der katalytischen Schicht vermieden werden. Ein Durchmesser der Edelstahlfaser liegt bevorzugt in einem Bereich von 0,01 µm bis 200 µm, insbesondere von 0,3 µm bis 200 µm.

Es ist erfindungsgemäß, dass der Edelstahl maximal 40 Massen-% Ni aufweist. Der Edelstahl weist zumindest ein Element auf, das ausgewählt ist aus der Gruppe:
- von 0,1 Massen-% bis 40 Massen-%, insbesondere von 10 Massen-% bis 40 Massen-%, Cr (Chrom),
- von 0,01 Massen-% bis 0,2 Massenprozent C (Kohlenstoff),
- von 0,1 Massen-% bis 8 Massen-% Mo (Molybdän),
- von 0,1 Massen-% bis 1 Massen-% Al (Aluminium),
- von 0,1 Massen-% bis 2 Massen-% Nb (Niob),
- von 0,1 Massen-% bis 1 Massen-% Ti (Titan),
- von 0,1 Massen-% bis 1 Massen-% Cu (Kupfer),
- von 0,1 Massen-% bis 3 Massen-% Mn (Mangan),
- von 0,1 Massen-% bis 3 Massen-% Si (Silizium),
- von 0,01 Massen-% bis 0,4 Massen-% N (Stickstoff),
- von 0,01 Massen-% bis 0,1 Massen-% P (Phosphor),
- von 0,01 Massen-% bis 0,1 Massen-% S (Schwefel),
- von 0,01 Massen-% bis 5 Massen-% ein weiteres Element oder mehrere weitere Elemente, wobei das weitere Element oder die weiteren Elemente nicht in der vorhergehenden Liste genannt sind und kein Eisen sowie kein Nickel aufweisen,
wobei der Rest Eisen und unvermeidbare Verunreinigungen ist. Folgende beispielhafte Stähle fallen darunter: 1.4404 (X2CrNiMo17-12-2), 1.4581 (GX5CrNiMoNb19-11-2), 1.4876 (X10NiCrAITi32-20) und 1.4562 (X1NiCrMoCu32-28-7).

Es ist denkbar, dass die Edelstahlfaser mit einem Edelmetall beschichtet ist. Das Edelmetall kann an der der katalytischen Schicht abgewandten Seite der Haftbeschichtung angeordnet sein. Das Edelmetall kann beispielsweise Platin (Pt) aufweisen oder bis auf unvermeidbare Verunreinigungen aus Pt bestehen. Eine solche Edelstahlfaser ist bevorzugt in einer Kathode angeordnet. Das Edelmetall kann beispielsweise Iridium (Ir) aufweisen oder bis auf unvermeidbare Verunreinigungen aus Ir bestehen. Eine solche Edelstahlfaser ist bevorzugt in einer Anode angeordnet.

Das erfindungsgemäße Vlies weist die Elektrodenfaser oder mehrere der Elektrodenfasern auf. Das Vlies ist porös und weist dadurch vorteilhaft eine große Oberfläche auf. Durch die große Oberfläche ist auch ein hoher Stoffumsatz pro Zeiteinheit bei der Elektrolyse von Wasser möglich. Es ist denkbar, dass im Wesentlichen die gesamte Oberfläche des Vlieses von der Haftbeschichtung umhüllt ist. Nicht von der Haftbeschichtung beschichtete Bereiche können beispielsweise an solchen Stellen vorliegen, an denen die Elektrodenfaser oder die Elektrodenfasern einander kontaktieren, und/oder an einem oder mehreren elektrischen Anschlüssen des Vlieses vorliegen.

Die erfindungsgemäße Elektrode weist bevorzugt das Vlies auf. Die Elektrode weist bevorzugt einen Träger auf, an dem das Vlies angeordnet und insbesondere befestigt ist. Beispielsweise kann dazu das Vlies in eine elektrochemische Zelle, insbesondere in eine Elektrolysezelle, eingebracht werden und durch mechanische Kräfte festgehalten werden. Dadurch hat die Elektrode vorteilhaft eine hohe Festigkeit. Es ist bevorzugt, dass der Träger ein Gewebe aufweist oder ist. Der Träger ist bevorzugt porös, so dass das Wasser, das bei einer der Elektrolyse in Wasserstoff und Sauerstoff zu spalten ist, besonders gut an das Vlies gelangen kann. Das Gewebe kann in besonders einfacher Art und Weise porös bereitgestellt werden.

Die erfindungsgemäße Elektrolysezelle weist die erfindungsgemäße Elektrode oder eine bevorzugte Ausführungsform davon auf und ist eingerichtet, Wasser elektrolytisch zu spalten. Die Elektrolysezelle kann auch das Wasser aufweisen, welches die Elektrode kontaktiert.

Die Elektrolysezelle weist bevorzugt eine Membran auf. Die Elektrode kontaktiert bevorzugt die Membran. Die Membran kann eingerichtet sein, Hydroxid-Ionen passieren zu lassen. Es ist bevorzugt, dass die Elektrode eine Anode ist. Alternativ oder zusätzlich ist es bevorzugt, dass eine Kathode der Elektrolysezelle der erfindungsgemäßen Elektrode oder einer bevorzugten Ausführungsform davon gebildet ist. Die Membran kann die Anode von der Kathode trennen.

Es ist auch denkbar, dass eine Mehrzahl der Elektrolysezellen zu einem Stapel zusammengeschaltet ist.

Das erfindungsgemäße Verfahren weist die Schritte auf: a) Bereitstellen einer Edelstahlfaser, die einen Edelstahl aufweist, der einen Anteil von Ni von mindestens 1 Massen-%, insbesondere mindestens 8 Massen-%, und maximal 40 Massen-% Ni aufweist; b) Umhüllen der Edelstahlfaser mit einer Haftbeschichtung, die unmittelbar auf die Edelstahlfaser durch elektrolytisches Abscheiden aus einer ersten Lösung aufgebracht wird, die, während die Haftbeschichtung abgeschieden wird, durch eine erzwungene Strömung an der Edelstahlfaser entlang strömt, wobei die Haftbeschichtung einen Anteil von Ni von mindestens 90 Massen-% aufweist; c) Umhüllen der Haftbeschichtung mit einer katalytischen Schicht, die unmittelbar auf die Haftbeschichtung durch elektrolytisches Abscheiden aus einer zweiten Lösung aufgebracht wird, die, während die katalytische Schicht abgeschieden wird, durch eine erzwungene Strömung an der Haftbeschichtung entlang strömt, wodurch eine Elektrodenfaser hergestellt wird, wobei die katalytische Schicht
- eine erste Legierung aufweist, die Ni und Fe mit einem addierten Anteil von Ni und Fe von mindestens 90 Massen-% in der katalytischen Schicht aufweist, wobei in der ersten Legierung das Stoffmengenverhältnis n(Ni)/n(Fe) in einem Bereich von 6 bis 12 liegt oder
- eine zweite Legierung aufweist, die Ni und Co mit einem addierten Anteil von Ni und Co von mindestens 90 Massen-% in der katalytischen Schicht aufweist, wobei in der zweiten Legierung das Stoffmengenverhältnis n(Ni)/n(Co) in einem Bereich von 5/3 bis 9/3 liegt oder
- eine dritte Legierung aufweist, die Ni, Co und Fe mit einem addierten Anteil von Ni, Co und Fe von mindestens 90 Massen-% in der katalytischen Schicht aufweist, wobei in der dritten Legierung das Stoffmengenverhältnis n(Ni)/n(Co) in einem Bereich von 0,2 bis 3 liegt und das Stoffmengenverhältnis n(Fe)/n(Co) in einem Bereich von 1 bis 12 liegt. Indem in Schritt b) die erste Lösung und in Schritt c) die zweite Lösung strömen, wird ein Diffusionswiderstand abgesenkt. Dadurch wird erreicht, dass die Edelstahlfaser und die Haftbeschichtung entlang ihrer vollständigen Oberflächen und besonders gleichmäßig beschichtet werden. Beispielsweise können die Schritte b) und c) in einer Durchflusszelle durchgeführt werden. Eine mittlere Fließgeschwindigkeit der ersten Lösung und/oder der zweiten Lösung in der Durchflusszelle kann beispielsweise von 0,1 cm/s bis 10 cm/s betragen.

Es ist auch denkbar, dass in Schritt b) die Edelstahlfaser mit der Haftbeschichtung durch stromloses Abscheiden aus der ersten Lösung, durch CVD (englisch: chemical vapour deposition) und/oder durch ALD (englisch: atomic layer deposition) umhüllt wird.

Es ist bevorzugt, dass in Schritt a) eine oder mehrere der Edelstahlfasern als ein Vlies bereitgestellt werden. Indem in Schritt b) die erste Lösung und in Schritt c) die zweite Lösung strömen, wird erreicht, dass das Vlies entlang ihrer vollständigen Oberfläche und besonders gleichmäßig mit der Haftbeschichtung und der katalytischen Schicht beschichtet wird.

Es ist besonders bevorzugt, dass in Schritt a) das Vlies durch ein mechanisches Verformen, insbesondere ein Pressen und/oder ein Walzen, der einen oder mehreren Edelstahlfasern bereitgestellt wird.

Bevorzugt weist das Verfahren den Schritt auf: d) Befestigen des Vlieses an einem Träger, wodurch eine Elektrode hergestellt wird.

In Schritt c) liegt die Temperatur der zweiten Lösung in einem Bereich von 20°C bis 40°C. Dadurch wurde überraschenderweise eine poröse Oberfläche der katalytischen Schicht erhalten. Die poröse Oberfläche hat vorteilhaft eine große Fläche, wodurch ein größerer Stoffumsatz pro Zeiteinheit bei der Elektrolyse des Wassers erreicht werden kann als ohne die poröse Oberfläche.

Es ist bevorzugt, dass das Verfahren den Schritt aufweist: a1) Reduzieren einer auf der Oberfläche der Edelstahlfaser angeordneten Oxidationsschicht, bevor die Edelstahlfaser mit der Haftbeschichtung umhüllt wird. Dadurch haftet die Haftbeschichtung fester an der Edelstahlfaser, als wenn die Oxidationsschicht noch vorhanden wäre. Dabei ist bevorzugt, dass in Schritt a1) eine Reaktion der Oxidationsschicht mit einer Säure, insbesondere Schwefelsäure und/oder Salpetersäure, durchgeführt wird und/oder eine reduzierende elektrische Spannung an die Edelstahlfaser angelegt wird. Die Schwefelsäure kann beispielsweise eine Konzentration von 0,5 mol/l bis 2 mol/l haben. Durch die Obergrenze von 2 mol/l kann die Bildung einer passivierenden Oxidschicht vermieden werden. Die Salpetersäure kann beispielsweise eine Konzentration von 0,5 mol/l bis 2 mol/l haben.

Die erste Lösung kann ein Nickelsalz aufweisen, das insbesondere ausgewählt ist aus der Gruppe: Ni(NO₃)₂•6H₂O, NiCl₂, NiSO₄, Ni₂(SO₄)₃. Die Konzentration c(Ni) der Nickelionen in der ersten Lösung kann beispielsweise in einem Bereich von 0,001 mol/l bis 0,5 mol/l liegen.

Die zweite Lösung kann, um die erste Legierung herzustellen, ein Nickelsalz und ein Eisensalz aufweisen. Das Nickelsalz kann beispielsweise ausgewählt sein aus der Gruppe:
Ni(NO₃)₂•6H₂O, NiCl₂, NiSO₄, Ni₂(SO₄)₃. Das Eisensalz kann beispielsweise ausgewählt sein aus der Gruppe: Fe(NO₃)₃•9H₂O, FeCl₃. Die Konzentration c(Ni) der Nickelionen in der zweiten Lösung kann beispielsweise in einem Bereich von 0,001 mol/l bis 0,5 mol/l liegen. Die Konzentration c(Fe) der Eisenionen in der zweiten Lösung ist so gewählt, dass ein Verhältnis c(Ni)/(c(Fe) in einem Bereich von 6 bis 12, insbesondere von 7 bis 10, liegt.

Die zweite Lösung kann, um die zweite Legierung herzustellen, ein Nickelsalz und ein Cobaltsalz aufweisen. Das Nickelsalz kann beispielsweise ausgewählt sein aus der Gruppe:
Ni(NO₃)₂•6H₂O, NiCl₂, NiSO₄, Ni₂(SO₄)₃. Das Cobaltsalz kann beispielsweise ausgewählt sein aus der Gruppe: CoCl₂, Co(NO₃)₂•6H₂O. Die Konzentration der Nickelionen in der zweiten Lösung kann beispielsweise in einem Bereich von 0,5 mol/l bis 1 mol/l liegen. Die Konzentration c(Co) der Cobaltionen in der zweiten Lösung ist so gewählt, dass ein Verhältnis c(Ni)/c(Co) in einem Bereich von 5/3 bis 9/3 liegt.

Die zweite Lösung kann, um die dritte Legierung herzustellen, ein Nickelsalz, ein Cobaltsalz und ein Eisensalz aufweisen. Das Nickelsalz kann beispielsweise ausgewählt sein aus der Gruppe: Ni(NO₃)₂•6H₂O, NiCl₂, NiSO₄, Ni₂(SO₄)₃. Das Eisensalz kann beispielsweise ausgewählt sein aus der Gruppe: Fe(NO₃)₃•6H₂O, FeCl₃. Das Cobaltsalz kann beispielsweise ausgewählt sein aus der Gruppe: CoCl₂, Co(NO₃)₂•9H₂O. Die Konzentration der Nickelionen in der zweiten Lösung kann beispielsweise in einem Bereich von 0,005 mol/l bis 1 mol/l liegen. Die Konzentration c(Co) der Cobaltionen in der zweiten Lösung ist so gewählt, dass ein Verhältnis c(Ni)/c(Co) in einem Bereich von 0,2 bis 3 liegt. Die Konzentration c(Fe) der Eisenionen in der zweiten Lösung ist so gewählt, dass ein Verhältnis c(Fe)/c(Co) in einem Bereich von 1 bis 12 liegt.

Der Schritt b) kann so lange durchgeführt werden, bis eine Dicke der Haftbeschichtung in einem Bereich von 0,05 µm bis 0,1 µm liegt. Der Schritt c) kann so lange durchgeführt werden, bis eine Dicke der katalytischen Schicht in einem Bereich von 0,01 µm bis 0,5 µm, insbesondere von 0,1 µm bis 0,2 µm, liegt.

Der Edelstahl weist erfindungsgemäß maximal 40 Massen-% Ni auf. Der Edelstahl weist zumindest ein Element auf, das ausgewählt ist aus der Gruppe:
- von 0,1 Massen-% bis 40 Massen-%, insbesondere von 10 Massen-% bis 40 Massen-%, Cr (Chrom),
- von 0,01 Massen-% bis 0,2 Massenprozent C (Kohlenstoff),
- von 0,1 Massen-% bis 8 Massen-% Mo (Molybdän),
- von 0,1 Massen-% bis 1 Massen-% Al (Aluminium),
- von 0,1 Massen-% bis 2 Massen-% Nb (Niob),
- von 0,1 Massen-% bis 1 Massen-% Ti (Titan),
- von 0,1 Massen-% bis 1 Massen-% Cu (Kupfer),
- von 0,1 Massen-% bis 3 Massen-% Mn (Mangan),
- von 0,1 Massen-% bis 3 Massen-% Si (Silizium),
- von 0,01 Massen-% bis 0,4 Massen-% N (Stickstoff),
- von 0,01 Massen-% bis 0,1 Massen-% P (Phosphor),
- von 0,01 Massen-% bis 0,1 Massen-% S (Schwefel),
- von 0,01 Massen-% bis 5 Massen-% ein weiteres Element oder mehrere weitere Elemente, wobei das weitere Element oder die weiteren Elemente nicht in der vorhergehenden Liste genannt sind und kein Eisen sowie kein Nickel aufweisen,
wobei der Rest Eisen und unvermeidbare Verunreinigungen ist. Folgende beispielhafte Stähle fallen darunter: 1.4404 (X2CrNiMo17-12-2), 1.4581 (GX5CrNiMoNb19-11-2), 1.4876 (X10NiCrAITi32-20) und 1.4562 (X1NiCrMoCu32-28-7).

Im Folgenden wird anhand der beigefügten schematischen Zeichnungen die Erfindung näher erläutert. Es zeigen:
Figur 1 einen Querschnitt durch eine Elektrodenfaser und
Figur 2 eine Draufsicht auf eine Elektrode.

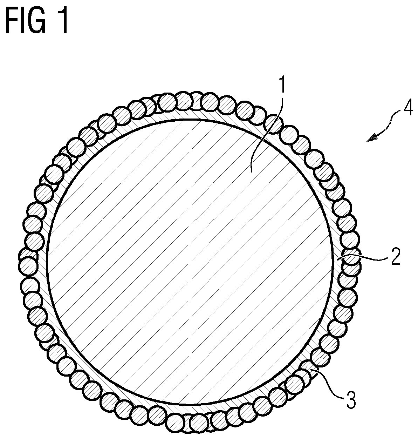

Wie es aus Figur 1 ersichtlich ist, weist eine Elektrodenfaser 4 eine Edelstahlfaser 1, eine Haftbeschichtung 2 und eine katalytische Schicht 3 auf. Die Edelstahlfaser 1 weist einen Edelstahl auf, der einen Anteil von Ni von mindestens 1 Massen-%, insbesondere mindestens 8 Massen-%, aufweist. Die Haftbeschichtung 2 ist unmittelbar auf die Edelstahlfaser 1 aufgebracht und umhüllt die Edelstahlfaser. Zudem weist die Haftbeschichtung 2 einen Anteil von Ni von mindestens 90 Massen-% auf. Die katalytische Schicht 3 ist unmittelbar auf die Haftbeschichtung 2 aufgebracht und umhüllt die Haftbeschichtung 2. Die katalytische Schicht 3 weist
- eine erste Legierung auf, die Ni und Fe mit einem addierten Anteil von Ni und Fe von mindestens 90 Massen-% in der katalytischen Schicht 3 aufweist, oder
- eine zweite Legierung auf, die Ni und Co mit einem addierten Anteil von Ni und Co von mindestens 90 Massen-% in der katalytischen Schicht 3 aufweist, oder
- eine dritte Legierung auf, die Ni, Co und Fe mit einem addierten Anteil von Ni, Co und Fe von mindestens 90 Massen-% in der katalytischen Schicht 3 aufweist.

In der ersten Legierung liegt das Stoffmengenverhältnis n(Ni)/n(Fe) in einem Bereich von 6 bis 12, in der zweiten Legierung liegt das Stoffmengenverhältnis n(Ni)/n(Co) in einem Bereich von 5/3 bis 9/3 und/oder in der dritten Legierung liegt das Stoffmengenverhältnis n(Ni)/n(Co) in einem Bereich von 0,2 bis 3 und das Stoffmengenverhältnis n(Fe)/n(Co) liegt in einem Bereich von 1 bis 12.

Eine Dicke der Haftbeschichtung 2 kann beispielsweise in einem Bereich von 0,05 µm bis 0,1 µm liegen. Eine Dicke der katalytischen Schicht 3 kann beispielsweise in einem Bereich von 0,01 µm bis 0,5 µm, insbesondere von 0,1 µm bis 0,2 µm, liegen. Ein Durchmesser der Edelstahlfaser 1 kann beispielsweise in einem Bereich von 0,01 µm bis 200 µm, insbesondere von 0,3 µm bis 200 µm liegen.

Der Edelstahl weist maximal 40 Massen-% Ni auf. Der Edelstahl kann zumindest ein Element aufweisen, das ausgewählt ist aus der Gruppe:
- von 0,1 Massen-% bis 40 Massen-%, insbesondere von 10 Massen-% bis 40 Massen-%, Cr,
- von 0,01 Massen-% bis 0,2 Massenprozent C,
- von 0,1 Massen-% bis 8 Massen-% Mo,
- von 0,1 Massen-% bis 1 Massen-% Al,
- von 0,1 Massen-% bis 2 Massen-% Nb,
- von 0,1 Massen-% bis 1 Massen-% Ti,
- von 0,1 Massen-% bis 1 Massen-% Cu,
- von 0,1 Massen-% bis 3 Massen-% Mn,
- von 0,1 Massen-% bis 3 Massen-% Si,
- von 0,01 Massen-% bis 0,4 Massen-% N,
- von 0,01 Massen-% bis 0,1 Massen-% P,
- von 0,01 Massen-% bis 0,1 Massen-% S,
- von 0,01 Massen-% bis 5 Massen-% ein weiteres Element oder mehrere weitere Elemente, wobei das weitere Element oder die weiteren Elemente nicht in der vorhergehenden Liste genannt sind und kein Eisen und kein Nickel aufweisen,
wobei der Rest Eisen und unvermeidbare Verunreinigungen ist.

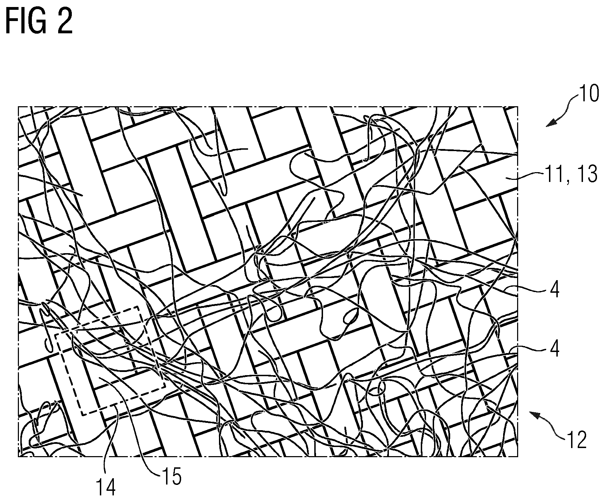

Figur 2 zeigt eine Draufsicht auf einen Ausschnitt einer Elektrode 10. Die Elektrodenfaser 4 oder mehrere der Elektrodenfasern 4 liegen in Form eines Vlieses 12 vor. Zudem zeigt Figur 2, dass die Elektrode 10 einen Träger 11 aufweisen kann und das Vlies 12 an dem Träger 11 angeordnet sein kann. Der Träger 11 kann porös ausgebildet sein. Dies kann beispielsweise bewerkstelligt werden, indem, wie in Figur 2 dargestellt, der Träger 11 ein Gewebe 13 aufweisen kann oder aus dem Gewebe 12 besteht. Das Gewebe 13 weist eine Mehrzahl von Maschen 14 auf, die jeweils einen Kanal 15 begrenzen, wobei Wasser über den Kanal 15 durch das Gewebe 13 hindurch strömen kann.

## Patentansprüche

1. Elektrodenfaser mit
- einer Edelstahlfaser (1), die einen Edelstahl aufweist, der einen Anteil von Ni von mindestens 1 Massen-%, insbesondere mindestens 8 Massen-%, und maximal 40 Massen-% Ni aufweist,
- einer Haftbeschichtung (2), die unmittelbar auf die Edelstahlfaser (1) aufgebracht ist und die Edelstahlfaser (1) umhüllt sowie einen Anteil von Ni von mindestens 90 Massen-% aufweist, und
- einer katalytischen Schicht (3), die unmittelbar auf die Haftbeschichtung (2) aufgebracht ist und die Haftbeschichtung (2) umhüllt sowie
- eine erste Legierung aufweist, die Ni und Fe mit einem addierten Anteil von Ni und Fe von mindestens 90 Massen-% in der katalytischen Schicht (3) aufweist, wobei in der ersten Legierung das Stoffmengenverhältnis n(Ni)/n(Fe) in einem Bereich von 6 bis 12 liegt oder
- eine zweite Legierung aufweist, die Ni und Co mit einem addierten Anteil von Ni und Co von mindestens 90 Massen-% in der katalytischen Schicht (3) aufweist, wobei in der zweiten Legierung das Stoffmengenverhältnis n(Ni)/n(Co) in einem Bereich von 5/3 bis 9/3 liegt oder
- eine dritte Legierung aufweist, die Ni, Co und Fe mit einem addierten Anteil von Ni, Co und Fe von mindestens 90 Massen-% in der katalytischen Schicht (3) aufweist, wobei in der dritten Legierung das Stoffmengenverhältnis n(Ni)/n(Co) in einem Bereich von 0,2 bis 3 liegt und das Stoffmengenverhältnis n(Fe)/n(Co) in einem Bereich von 1 bis 12 liegt.

2. Elektrodenfaser gemäß Anspruch 1, wobei eine Dicke der katalytischen Schicht (3) in einem Bereich von 0,01 µm bis 0,5 µm, insbesondere von 0,1 µm bis 0,2 µm, liegt.

3. Elektrodenfaser gemäß Anspruch 1 oder 2, wobei der Edelstahl zumindest ein Element aufweist, das ausgewählt ist aus der Gruppe:
- von 0,1 Massen-% bis 40 Massen-%, insbesondere von 10 Massen-% bis 40 Massen-%, Cr,
- von 0,01 Massen-% bis 0,2 Massenprozent C,
- von 0,1 Massen-% bis 8 Massen-% Mo,
- von 0,1 Massen-% bis 1 Massen-% Al,
- von 0,1 Massen-% bis 2 Massen-% Nb,
- von 0,1 Massen-% bis 1 Massen-% Ti,
- von 0,1 Massen-% bis 1 Massen-% Cu,
- von 0,1 Massen-% bis 3 Massen-% Mn,
- von 0,1 Massen-% bis 3 Massen-% Si,
- von 0,01 Massen-% bis 0,4 Massen-% N,
- von 0,01 Massen-% bis 0,1 Massen-% P,
- von 0,01 Massen-% bis 0,1 Massen-% S,
- von 0,01 Massen-% bis 5 Massen-% ein weiteres Element oder mehrere weitere Elemente, wobei das weitere Element oder die weiteren Elemente nicht in der vorhergehenden Liste genannt sind und kein Eisen aufweisen,
wobei der Rest Eisen und unvermeidbare Verunreinigungen ist.

4. Vlies, das eine oder mehrere Elektrodenfasern (4) gemäß einem der Ansprüche 1 bis 3 aufweist.

5. Elektrode mit einem Vlies (12) gemäß Anspruch 4.

6. Elektrode gemäß Anspruch 5, wobei die Elektrode (10) einen Träger (11) aufweist, an dem das Vlies (12) befestigt ist.

7. Elektrode gemäß Anspruch 6, wobei der Träger (11) ein Gewebe (13) aufweist.

8. Elektrolysezelle mit einer Elektrode (10) gemäß einem der Ansprüche 5 bis 7, wobei die Elektrolysezelle eingerichtet ist, Wasser elektrolytisch zu spalten.

9. Elektrolysezelle gemäß Anspruch 8, wobei die Elektrolysezelle eine Membran aufweist, die insbesondere eingerichtet ist, Hydroxid-Ionen passieren zu lassen, und/oder die Elektrode (10) kontaktiert.

10. Elektrolysezelle gemäß Anspruch 8 oder 9, wobei die Elektrode (10) eine Anode ist.

11. Verfahren zur Herstellung einer Elektrodenfaser (4) gemäß einem der Ansprüche 1 bis 3, mit den Schritten:
a) Bereitstellen der Edelstahlfaser (1);
b) Umhüllen der Edelstahlfaser (1) mit der Haftbeschichtung (2), die unmittelbar auf die Edelstahlfaser (1) durch elektrolytisches Abscheiden aus einer ersten Lösung aufgebracht wird, die, während die Haftbeschichtung (2) abgeschieden wird, durch eine erzwungene Strömung an der Edelstahlfaser (1) entlang strömt;
c) Umhüllen der Haftbeschichtung (2) mit der katalytischen Schicht (3), die unmittelbar auf die Haftbeschichtung (2) durch elektrolytisches Abscheiden aus einer zweiten Lösung aufgebracht wird, die, während die katalytische Schicht (3) abgeschieden wird, durch eine erzwungene Strömung an der Haftbeschichtung (2) entlang strömt, wodurch die Elektrodenfaser (4) hergestellt wird.

12. Verfahren gemäß Anspruch 11, wobei in Schritt a) eine oder mehrere der Edelstahlfasern (1) als ein Vlies (12) bereitgestellt werden und das Verfahren den Schritt aufweist: d) Befestigen des Vlieses (12) an einem Träger (11), wodurch eine Elektrode (10) hergestellt wird.

13. Verfahren gemäß Anspruch 11 oder 12, wobei in Schritt c) die Temperatur der zweiten Lösung in einem Bereich von 20°C bis 40°C liegt.

## Claims

1. An electrode fibre comprising
- a stainless steel fibre (1) which has a stainless steel having a proportion of Ni of at least 1% by mass, in particular at least 8% by mass, and at most 40% by mass of Ni,
- an adhesive coating (2) which is applied directly to the stainless steel fibre (1) and envelops the stainless steel fibre (1) and has a proportion of Ni of at least 90% by mass, and
- a catalytic layer (3) which is applied directly to the adhesive coating (2) and envelops the adhesive coating (2), and
- has a first alloy which has Ni and Fe with an added proportion of Ni and Fe of at least 90% by mass in the catalytic layer (3), wherein the molar ratio n(Ni)/n(Fe) in the first alloy is in a range from 6 to 12, or
- has a second alloy which has Ni and Co with an added proportion of Ni and Co of at least 90% by mass in the catalytic layer (3), wherein the molar ratio n(Ni)/n(Co) in the second alloy is in a range from 5/3 to 9/3, or
- has a third alloy which has Ni, Co and Fe with an added proportion of Ni, Co and Fe of at least 90% by mass in the catalytic layer (3), wherein the molar ratio n(Ni)/n(Co) in the third alloy is in a range from 0.2 to 3 and the molar ratio n(Fe)/n(Co) is in a range from 1 to 12.

2. The electrode fibre according to claim 1, wherein a thickness of the catalytic layer (3) is in a range from 0.01µm to 0.5um, particularly from 0.1µm to 0.2µm.

3. The electrode fibre according to claim 1 or 2, wherein the stainless steel has at least one element selected from the group consisting of:
- from 0.1% by mass to 40% by mass, particularly from 10% by mass to 40% by mass, of Cr,
- from 0.01% by mass to 0.2% by mass of C,
- from 0.1% by mass to 8% by mass of Mo,
- from 0.1% by mass to 1% by mass of Al,
- from 0.1% by mass to 2% by mass of Nb,
- from 0.1% by mass to 1% by mass of Ti,
- from 0.1% by mass to 1% by mass of Cu,
- from 0.1% by mass to 3% by mass of Mn,
- from 0.1% by mass to 3% by mass of Si,
- from 0.01% by mass to 0.4% by mass of N,
- from 0.01% by mass to 0.1% by mass of P,
- from 0.01% by mass to 0.1% by mass of S,
- from 0.01% by mass to 5% by mass of one or more other element(s), wherein the other element(s) are not mentioned in the list above and do not have any iron, wherein the balance is iron and unavoidable impurities.

4. Nonwoven fabric which has one or more electrode fibres (4) according to any one of claims 1 to 3.

5. An electrode comprising a nonwoven fabric (12) according to claim 4.

6. The electrode according to claim 5, wherein the electrode (10) has a carrier (11) which the nonwoven fabric (12) is attached to.

7. The electrode according to claim 6, wherein the carrier (11) has a fabric (13).

8. An electrolysis cell comprising an electrode (10) according to any one of claims 5 to 7, wherein the electrolysis cell is configured to electrolytically cleave water.

9. The electrolysis cell according to claim 8, wherein the electrolysis cell has a membrane specifically configured to allow hydroxide ions to pass through and/or contacting the electrode (10).

10. The electrolysis cell according to claim 8 or 9, wherein the electrode (10) is an anode.

11. Process for producing an electrode fibre (4) according to any one of claims 1 to 3, comprising the steps of:
a) providing the stainless steel fibre (1);
b) enveloping the stainless steel fibre (1) with the adhesive coating (2) applied directly to the stainless steel fibre (1) by electrolytic deposition from a first solution flowing along the stainless steel fibre (1) by forced flow during the deposition of the adhesive coating (2);
c) enveloping the adhesive coating (2) with the catalytic layer (3) applied directly to the adhesive coating (2) by electrolytic deposition from a second solution flowing along the adhesive coating (2) by forced flow during the deposition of the catalytic layer (3), thereby producing the electrode fibre (4).

12. The process according to claim 11, wherein in step a) one or more of the stainless steel fibres (1) are provided as a nonwoven fabric (12), and the method comprises the step of: d) attaching the nonwoven fabric (12) to a carrier (11), thereby producing an electrode (10).

13. The process according to claim 11 or 12, wherein in step c) the temperature of the second solution is in a range from 20°C to 40°C.

## Revendications

1. Fibre d'électrode ayant
- une fibre d'acier inoxydable (1) comprenant un acier inoxydable ayant une teneur en Ni d'au moins 1 % en masse, en particulier d'au moins 8 % en masse, et d'un maximum de 40 % en masse de Ni,
- un revêtement adhésif (2) qui est appliqué directement sur la fibre d'acier inoxydable (1) et entoure la fibre d'acier inoxydable (1) et a une teneur en Ni d'au moins 90 % en masse, et
- une couche catalytique (3) qui est appliquée directement sur le revêtement adhésif (2) et entoure le revêtement adhésif (2) et
- un premier alliage comprenant du Ni et du Fe avec une proportion ajoutée de Ni et de Fe d'au moins 90 % en masse dans la couche catalytique (3), dans lequel dans le premier alliage le rapport molaire n(Ni)/n(Fe) est compris entre 6 et 12 ou
- un second alliage comprenant du Ni et du Co avec une proportion ajoutée de Ni et de Co d'au moins 90 % en masse dans la couche catalytique (3), dans lequel dans le second alliage le rapport molaire n(Ni)/n(Co) est compris entre 5/3 et 9/3 ou
- un troisième alliage comprenant Ni, Co et Fe avec une proportion ajoutée de Ni, Co et Fe d'au moins 90 % en masse dans la couche catalytique (3), dans lequel dans le troisième alliage le rapport molaire n(Ni)/n(Co) est dans une plage de 0,2 à 3 et le rapport molaire n(Fe)/n(Co) est compris entre 1 et 12.

2. Fibre d'électrode selon la revendication 1, dans laquelle l'épaisseur de la couche catalytique (3) est comprise entre 0,01 µm et 0,5 µm, en particulier entre 0,1 µm et 0,2 µm.

3. Fibre d'électrode selon la revendication 1 ou 2, dans laquelle l'acier inoxydable comprend au moins un élément choisi dans le groupe :
- de 0,1 % en masse à 40 % en masse, en particulier de 10 % en masse à 40 % en masse de Cr,
- de 0,01 % en masse à 0,2 % en masse de C,
- de 0,01 % en masse à 8 % en masse de Mo,
- de 0,01 % en masse à 1 % en masse d'Al,
- de 0,01 % en masse à 2 % en masse de Nb,
- de 0,01 % en masse à 1 % en masse de Ti,
- de 0,01 % en masse à 1 % en masse de Cu,
- de 0,01 % en masse à 3 % en masse de Mn,
- de 0,01 % en masse à 3 % en masse de Si,
- de 0,01 % en masse à 0,4 % en masse de N,
- de 0,01 % en masse à 0,1 % en masse de P,
- de 0,01 % en masse à 0,1 % en masse de S,
- de 0,01 % en masse à 5 % en masse d'un élément supplémentaire ou plusieurs éléments supplémentaires, l'élément ou les éléments supplémentaires n'étant pas mentionnés dans la liste précédente et ne contenant pas de fer, le reste étant du fer et des impuretés inévitables.

4. Tissu non tissé comprenant une ou plusieurs fibres électrodes (4) selon l'une quelconque des revendications 1 à 3.

5. Electrode avec un tissu non tissé (12) selon la revendication 4.

6. Electrode selon la revendication 5, dans laquelle l'électrode (10) comporte un support (11) sur lequel est fixée le tissu non-tissé (12).

7. Électrode selon la revendication 6, dans laquelle le support (11) comprend un tissu (13).

8. Cellule d'électrolyse avec une électrode (10) selon l'une quelconque des revendications 5 à 7, dans laquelle la cellule d'électrolyse est agencée pour séparer l'eau par voie électrolytique.

9. Cellule d'électrolyse selon la revendication 8, dans laquelle la cellule d'électrolyse comporte une membrane qui est particulièrement conçue pour permettre aux ions hydroxyde de traverser et/ou d'entrer en contact avec l'électrode (10).

10. Cellule d'électrolyse selon la revendication 8 ou 9, dans laquelle l'électrode (10) est une anode.

11. Procédé de fabrication d'une fibre électrode (4) selon l'une des revendications 1 à 3, comprenant les étapes suivantes :
a) la fourniture de la fibre en acier inoxydable (1) ;
b) le revêtement de la fibre en acier inoxydable (1) avec le revêtement adhésif (2), qui est appliqué directement sur la fibre en acier inoxydable (1) par dépôt électrolytique à partir d'une première solution qui, pendant le dépôt du revêtement adhésif (2), s'écoule le long de la fibre en acier inoxydable (1) par un flux forcé ;
c) le revêtement du revêtement adhésif (2) avec la couche catalytique (3), qui est appliquée directement sur le revêtement adhésif (2) par dépôt électrolytique à partir d'une seconde solution qui, pendant le dépôt de la couche catalytique (3), s'écoule le long du revêtement adhésif (2) par un flux forcé, produisant ainsi la fibre d'électrode (4).

12. Procédé selon la revendication 11, dans lequel, à l'étape a), une ou plusieurs des fibres d'acier inoxydable (1) sont fournies sous la forme d'un tissu non tissé (12) et le procédé comprend l'étape consistant à : d) fixer le tissu non tissé (12) à un support (11), produisant ainsi une électrode (10).

13. Procédé selon la revendication 11 ou 12, dans lequel, à l'étape c), la température de la seconde solution est comprise entre 20°C et 40°C.
